# EUROPÄISCHE PATENTSCHRIFT

(11) **EP 4 242 527 B1**
(45) Veröffentlichungstag und Bekanntmachung des Hinweises auf die Patenterteilung: **28.01.2026**
(21) Anmeldenummer: 23160968.6
(22) Anmeldetag: 09.03.2023
(51) Int. Cl.: F24D 3/14, F24D 3/16, F24F 5/00

(54) **PLATTENELEMENT FÜR FLÄCHENHEIZUNGEN UND -KÜHLUNGEN MIT HEIZ- ODER KÜHLREGISTER**
PLATE ELEMENT FOR SURFACE HEATING AND COOLING WITH HEATING OR COOLING REGISTER
PANNEAU POUR CHAUFFAGES ET REFROIDISSEMENTS DE SURFACES AVEC REGISTRE DE CHAUFFAGE OU DE REFROIDISSEMENT

(30) Priorität: 10.03.2022 DE 202022101316 U
(43) Veröffentlichungstag der Anmeldung: 13.09.2023
(73) Patentinhaber: LINDNER SE, 94424 Arnstorf (DE)
(72) Erfinder: Frischhut, Christian, 94428 Eichendorf / Adldorf (DE); Mellau, Carlo, 84347 Pfarrkirchen (DE); Waas, Thomas, 94522 Wallersdorf / Haidlfing (DE)
(74) Vertreter: Rings, Rolf

(56) Entgegenhaltungen:
- EP-A1- 0 769 659
- DE-U1- 202012 003 810
- DE-U1- 9 102 260
- JP-A- 2018 194 280

## Beschreibung

Die vorliegende Erfindung betrifft ein Plattenelement für Flächenheizungen oder -kühlungen von Decken oder Wänden in Gebäudeinnenräumen, welche zu Heiz- oder Kühlzwecken mit einem Heiz- oder Kühlmedium durchströmt werden. Solche Plattenelemente werden entweder jeweils einzeln als Flächenheizungen an Wänden oder Decken angebracht oder als eine Mehrzahl von gekoppelten Platten an den Decken beispielsweise zum Realisieren der Heiz- und Klimatisierungserfordernisse in den Räumen von Gebäuden montiert. Die Plattenelemente weisen dafür neben einer Grundplatte ein in der Grundplatte oder an der Grundplatte angebrachtes Register für ein Heiz- oder Kühlmedium auf, welches beispielsweise durch mäanderförmig verlegte Rohre aus Kupfer oder Kunststoff strömt. Damit kann sowohl eine Kühldecke als auch eine Heizdecke aus mehreren solchen miteinander verbundenen Plattenelementen realisiert werden, welche die konventionellen Heizkörper oder Lüftungsheizungen ersetzt oder ergänzt.

Dabei ist es bekannt, in den Plattenelementen zwischen dem Heiz- oder Kühlregister Wärmeleitprofile einzusetzen, welche eine verbesserte Wärmeübertragung auf die insbesondere metallische Grundplatte der Elemente bieten. Auch ist es bekannt, beispielsweise Rohrschlangen aus Kupfer- oder Kunststoffrohren als Heiz- oder Kühlregister innerhalb eines gut wärmeleitenden Materials in den Plattenelementen einzubinden. Die Grundplatten, welche beispielsweise in Form von perforierten und wannenförmig an den Rändern abgewinkelten Metallblechen realisiert sind, dienen dafür der Aufnahme sowohl des Registers als auch der Halterungen und Befestigungen derartiger Plattenelemente an den Wänden oder Decken von Gebäuden.

Bei den bisher bekannten derartigen Plattenelementen für Flächenheizungen besteht ein Nachteil dahingehend, dass ein Wärmeübergang auf die zum Innenraum hin weisenden Grundplatten in bestimmten Anwendungsfällen nicht hinreichend für die gewünschte Heiz- oder Kühlwirkung in den Räumen ist. Es bestehen Probleme beispielsweise bei nicht ebenen Grundplatten, da die daran angeschlossenen Kühlregister oder Wärmeleitprofile dann nur punktuell und damit unzureichend für die thermische Weiterleitung der Wärme an den metallischen Grundplatten der Deckenelemente oder Wandelemente anliegen. Eine verminderte Heiz- oder Kühlwirkung ist dann unweigerlich gegeben. In der Vergangenheit wurde bei derartigen Plattenelementen für Deckenheizungen beispielsweise vorgeschlagen, speziell in der Form angepasste Wärmeleitprofile zwischen dem Register und den Rohren für das Heiz- oder Kühlmedium auf Seiten der Grundplatten vorzusehen. Hiermit wird eine gewisse Verbesserung erreicht, jedoch sind diese Maßnahmen kostenintensiv und in der Herstellung aufwendig und nicht immer geeignet, beispielsweise bei dreidimensional geformten und verschachtelten Plattenelementen, die eine gute Wärmeübertragung auf die Innenseite bzw. Sichtseite zum Innenraum der Gebäude hin somit nicht in ausreichendem Maß erlauben.

DE 91 02 260 U1 betrifft eine Kühldecke für Raumluftkühlung, bei welcher das plattenförmige Grundelement an einer mittigen Stelle eine Verzahnung aufweist, in welche eine Gegenverzahnung einer Wärmeleitschiene für das Kühlregister über eine Clips-Verbindung eingesetzt werden kann.

EP 0 769 659 A1 betrifft eine Heiz- und Kühldecke mit einer Kontaktplatte, welche eine lokale Klebevertiefung aufweist, in der ein Klebestreifen oder Klebemittel zum Anbringen an die darunterliegende Grundplatte (gelochte Deckenplatte) vorgesehen ist.

JP 2018 194280 A beschreibt ein Klimatisierungspaneel, bei welchem ein Kleber verwendet wird, um das Rohr besser in den Aufnahmen oder in der Verbindung zur Grundplatte zu fixieren. Der Kleber wird zwischen einer als Substrat bezeichneten Grundplatte und einem Rohr teilweise auch in Vertiefungen in der Grundplatte eingebracht, wobei hier sehr kleine Vertiefungen oder Nuten im Mikrometerbereich eingearbeitet sind, um die Klebeverbindung mit dem Kleber zu verbessern.

DE 20 2012 003 810 U1 betrifft ein Verbundelement mit sandwichförmiger Gestaltung einer Wärmeleitschicht mit zwei Platten, die von oben und unten jeweils die Rohre eines Registers umschließen.

Vor diesem Hintergrund ist es die Aufgabe der vorliegenden Erfindung, ein Plattenelement für Flächenheizungen oder -kühlungen von Decken oder Wänden von Gebäudeinnenräumen mit einem Heiz- oder Kühlregister bereitzustellen, welche eine möglichst großflächige und gleichmäßige Wärmeabgabe und einen reduzierten Energieaufwand bei der Heizung und Kühlung von Gebäudeinnenräumen bei auch unterschiedlich geformten und ausgebildeten Plattenelementen erlauben. Ferner ist es eine Aufgabe der vorliegenden Erfindung, eine verbesserte Wärmeübertragung von den Heiz- und Kühlregistern auf die Grundplatten unabhängig von der Form der Grundplatten solcher Plattenelemente mit möglichst geringem konstruktivem Aufwand und Herstellungskosten zu erreichen.

Diese Aufgabe wird mit einem Plattenelement für Flächenheizungen oder -kühlungen von Decken oder Wänden von Gebäudeinnenräumen gemäß Anspruch 1 gelöst. Vorteilhafte Ausgestaltungen und Weiterbildungen der Erfindung sind Gegenstand der abhängigen Ansprüche.

Erfindungsgemäß wird nach Anspruch 1 ein Plattenelement für Flächenheizungen oder -kühlungen von Decken oder Wänden von Gebäudeinnenräumen mit einer zum Innenraum bzw. zur Sichtseite des Raums hin weisenden metallischen Grundplatte und mit einem damit direkt oder indirekt verbundenen Register für ein Wärmeträgermedium, insbesondere Heiz- oder Kühlmedium, welches durch das Register strömt, und mit mindestens einer Wärmeleitschicht zwischen der Grundplatte und dem Register für eine Wärmeübertragung zwischen dem Register und der Grundplatte vorgeschlagen, wobei das Plattenelement dadurch gekennzeichnet ist, dass die Grundplatte eine in der Flächenausdehnung dreidimensionale, unebene Form aufweist und dass die Wärmeleitschicht auf der zur Grundplatte hin weisenden Seite eine in der unebenen Form der Grundplatte entsprechende Gegenform für ein formschlüssiges Ineinandergreifen und durchgängig flächiges Anbinden der Wärmeleitschicht an der Grundplatte zusammen mit dem Register zum Heizen oder Kühlen aufweist oder im Zusammenbau von Grundplatte und Wärmeleitschicht bildet.

Das Plattenelement nach der Erfindung weist somit eine auf der Innenseite der Räume liegende Grundplatte auf und ein damit verbundenes Register aus beispielsweise Rohren, Kanälen oder Leitungen für ein Heiz- oder Kühlmedium, welches das Register für die Heiz- und Kühlzwecke durchströmt. Ferner ist das Plattenelement mit mindestens einer Wärmeleitschicht versehen, die zwischen der Grundplatte und dem Register angeordnet ist, um eine verbesserte und möglichst großflächige Übertragung der Wärme oder Kälte von dem Register auf die an der Außenseite liegende Grundplatte hin und damit in den Innenraum des Gebäudes hinein zu ermöglichen. Erfindungsgemäß ist die Grundplatte ein Plattenelement oder Blechelement, welches eine in der Flächenausdehnung dreidimensionale, unebene Form aufweist. Die Grundplatte ist damit keine vollständig ebene Platte, sondern weist eine spezielle dreidimensional vorstehende oder zurückspringende Form auf mit Erhebungen und Vertiefungen, welche beispielsweise in einer strukturierten oder unstrukturierten Form gebildet sein können. Die Grundplatte bildet damit an ihrer zu dem Register hin weisenden Seite keine ebene Anlagefläche, so dass beispielsweise daran anliegende ebene Wärmeübertragungselemente oder Registerelemente nur punktuell an bestimmten Stellen in Kontakt anliegen können.

Um dies und den damit einhergehenden schlechten Wärmeübergang zwischen Register und Grundplatte zu verhindern, ist erfindungsgemäß in dem Plattenelement mindestens eine Wärmeleitschicht vorgesehen, welche auf der zur Grundplatte hin weisenden Seite eine der unebenen Form der Grundplatte entsprechende Gegenform aufweist. Die Gegenform ist dabei so gebildet, dass sie ein formschlüssiges Ineinandergreifen von Wärmeleitschicht und Grundplatte ermöglicht und ein durchgängig flächiges Anbinden der Wärmeleitschicht an der Grundplatte ohne Zwischenräume erlaubt. Damit ist die Wärmeleitschicht und auch das mit der Wärmeleitschicht verbundene Register oder darin sogar integrierte Register möglichst nahe und in großer Flächenausdehnung wärmetechnisch mit der metallischen Grundplatte gekoppelt. Auf diese Weise wird ein deutlich besserer Wärme- bzw. Kälteübergang zwischen dem Register und der die Außenseite und damit die in den Gebäuderaum hin weisenden Fläche bildenden Seite der Plattenelemente erreicht. Eine höhere Heizwirkung oder Kühlwirkung kann damit auch über große Flächen hinweg erzielt werden. Die unebene Form der Grundplatten vergrößert quasi die effektive Wärmeabgabefläche im Vergleich zu lediglich ebenen Flächenheizungen. Der Energiebedarf ist damit geringer als bei herkömmlichen derartigen Plattenelementen. Die Fläche insgesamt ist durch die unebene Form der Grundplatte auch erhöht gegenüber einer lediglich ebenen gleichförmigen Deckenplatte, welche beispielsweise noch zu Zwecken der Akustik auch perforiert mit Löchern ausgebildet sein kann.

Die erfindungsgemäßen Plattenelemente weisen somit auch insbesondere für dreidimensional verformte unebene Grundplatten eine deutlich verbesserte Wärmeleittechnik für Heiz- oder Kühldecken auf. Die mindestens eine Wärmeleitschicht, die auch aus mehreren verschiedenen Wärmeleitschichten gebildet sein kann, ist in ihrer Struktur, ihrem Material oder in ihrer ausgehärteten endgültigen Form so gebildet, dass sie eine entsprechende Gegenform für die dreidimensionale unebene Form der Grundplatte bietet. Die beiden Elemente können daher formentsprechend und insgesamt vollständig flächig aneinander anliegend vorgesehen sein, so dass auch bei relativ dünner Ausgestaltung der Plattenelemente insgesamt hier ein sehr guter Wärmeübergang zwischen dem Heiz- oder Kühlmedium in dem Register einerseits und der in der Regel aus einem metallischen Blech bestehenden Grundplatte auch bei hoher Formvariabilität der Grundplatte gewährleistet ist.

Eine Anbindung oder Verbindung zwischen der Grundplatte und der Wärmeleitschicht kann beispielsweise durch einfaches Aufliegen realisiert sein, durch ein Verkleben oder durch ein Verpressen bei beispielsweise einem komprimierbaren Material der Wärmeleitschicht. In all diesen Fällen ist die Wärmeleitschicht immer im Endzustand mit einer entsprechenden Gegenform gebildet und liegt flächenbündig über die gesamte dreidimensional gebildete Ebene hin an den Grundplatten der Plattenelemente an. Die unebene Gegenform in der zur Grundplatte hin weisenden Seite der Wärmeleitschicht kann auch durch eine Bearbeitung entsprechend der Bearbeitung des Grundelements erfolgen: Wenn beispielsweise die metallische Grundplatte als ein dreidimensional geprägtes Metallblech mit quadratischen Verformungen realisiert ist, kann durch entsprechend geformte Prägestempel oder mechanische Bearbeitungen an dem Material der Wärmeleitschicht die Gegenform auch vorab vor einem Verbinden oder Zusammensetzen der Elemente und Komponenten realisiert sein. Insgesamt ergeben sich erfindungsgemäß durch das Plattenelement deutlich verbesserte Eigenschaften hinsichtlich der Heizung und Kühlung der Gebäude, der Akustik, was das Gewicht und die Dicke der Platten betrifft sowie was die Verarbeitung und Herstellung der erhöhten Wärmeübertragungseigenschaften betrifft. Es sind keine aufwendigen konstruktiven Maßnahmen wie extra Materialschichten oder zusätzlichen Bauraum erfordernde Lüftungskanäle innerhalb der Struktur des Plattenelements nötig, um die verbesserte und optimierte Heiz- oder Kühlwirkung in den Plattenelementen für Decken oder Flächenheizungen von Decken oder Wänden gemäß der Erfindung zu erreichen.

Gemäß einer vorteilhaften Ausgestaltung der Erfindung umfasst das Register für das Heiz- oder Kühlmedium über die Fläche des Plattenelements hinweg verteilt angeordnete Leitungen, Kanäle oder Rohre für das Wärmeträgermedium (Heiz- oder Kühlmedium), insbesondere Rohre in einer Art mäanderförmigen Form. Solche schlangenlinienförmig oder mäanderförmig verlegte Rohre beispielsweise aus Kupfer bilden ein großflächiges Heiz- oder Kühlregister für derartige Plattenelemente, welches direkt in dem Bereich der Grundplatte und wärmetechnisch mit diesen verbunden erfindungsgemäß vorgesehen ist. Dabei ist das Kühlregister möglichst nahe an der unebenen Fläche der Grundplatte, welche zum Innenraum des Gebäuderaums hin weist, angeordnet, so dass ein guter Wärmeübergang oder Kälteübergang zwischen dem Wärmeträgermedium und der Grundplatte gegeben ist trotz ihrer unebenen, dreidimensional strukturierten oder unstrukturierten Formgebung.

Gemäß einer weiteren vorteilhaften Ausgestaltung der Erfindung ist das Register für das Heiz- oder Kühlmedium mindestens teilweise in dem Material der Wärmeleitschicht eingebettet und von diesem formschlüssig umschlossen bzw. umgeben. Das Register kann beispielsweise beidseitig von einem plattenförmigen, komprimierbaren Material aus wärmeleitfähigen Platten umschlossen und eingebettet sein. Das Register kann auch nur teilweise im Inneren eines gut wärmeleitenden Materials, welches ursprünglich flüssig ist und anschließend aushärtet, eingebettet sein, wie z. B. Gips oder dergleichen, Eine gute Wärmeübertragung oder Kälteübertragung von dem Register auf die die Abstrahlfläche bildende Grundplatte ist somit gewährleistet. Eine möglichst gute Wärmeübertragung und Wärmeabstrahlung bei derartigen Flächenheizungen ist damit mit den erfindungsgemäßen Plattenelementen realisierbar bei einem trotzdem relativ einfachen konstruktiven Aufbau, einer geringen Bauhöhe und einem relativ geringen Gewicht der gesamten Plattenelemente.

Gemäß einer weiteren vorteilhaften Ausgestaltung der Erfindung weist die Wärmeleitschicht in einigen Ausführungsbeispielen ein komprimierbares, wärmeleitendes Material zum Realisieren der unebenen Gegenform entsprechend der unebenen Form der Grundplatte auf. Die dreidimensionale strukturierte oder unstrukturierte unebene Form der Grundplatte erhält damit eine entsprechende Gegenform in der zu ihr weisenden Seite der Wärmeleitschicht durch ein Komprimieren des Materials der Wärmeleitschicht. Dafür können verschiedene komprimierbare Materialien oder Plattenelemente eingesetzt werden, wie z. B. verdichtete Graphitplatten, Wabenkernplatten oder Metallschaumplatten.

Wenn die Einzelteile des Plattenelements zusammengesetzt werden, nämlich die Wärmeleitschicht, das Register und die Grundplatte, wird die Wärmeleitschicht aufgrund ihrer Materialeigenschaft so verformt, dass sie sich zum einen an die Form des Registers entsprechend anpasst zur Ausbildung von Aufnahmevertiefungen und zum anderen sich eine unebene Gegenform entsprechend der unebenen Form der Grundplatte ergibt. Das komprimierbare Material wird sozusagen lokal entsprechend den jeweiligen Gegebenheiten spezifisch verformt, beispielsweise durch ein Zusammenpressen der einzelnen Schichten mit einer Pressvorrichtung und ein anschließendes Fixieren der Elemente aneinander. Eine solche komprimierbare Form von wärmeleitenden Materialien kann unterschiedliche Ausgestaltungen haben, beispielsweise können Graphitplatten verwendet werden, die entsprechende Dicken aufweisen, um das Ausbilden der dreidimensionalen unebenen Form jeweils ohne Zwischenräume realisieren zu können. Dabei werden die Vertiefungen und Erhebungen der unebenen Grundplatte entsprechend nachgebildet, so dass eine gute Anbindung und durchgängig flächenbündige Anlage der Wärmeleitschicht an der Grundplatte zum verbesserten Abgeben von Wärme und Kälte in den Raum hinein gegeben ist. Die komprimierbare Form der Wärmeleitschicht kann beispielsweise durch bleibend verformbare Schaumstoffmaterialien, wärmeleitfähige Materialien oder dergleichen realisiert werden. Auch können reversibel verformbare Materialien verwendet werden, die dann über entsprechende Verpressungen und Halterungen aneinander angebracht und fixiert werden. Vorzugsweise wird bei dieser Ausgestaltung das Plattenelement so gebildet, dass die Register innerhalb des Materials der Wärmeleitschicht eingebunden sind oder auch direkt an der Grundplatte anliegen und von der Wärmeleitschicht von der Rückseite her formentsprechend umgeben werden.

Gemäß einer weiteren vorteilhaften Ausgestaltung der Erfindung ist die Wärmeleitschicht in Form von mindestens zweiteiligen, komprimierbaren Platten aus wärmeleitfähigem Material vorgesehen zum sandwichartigen Aufnehmen des Registers zwischen den Platten und zum formentsprechenden Anbinden der Wärmeleitschicht mittels entsprechender Gegenform an die unebene Grundplatte. Es wird sozusagen eine auf der Grundplatte direkt aufliegende erste komprimierbare Platte vorgesehen, auf welche dann das Register aufgelegt wird und anschließend darüber die zweite komprimierbare Platte der Wärmeleitschicht angelegt wird. Nach einem Verpressen der Elemente miteinander ist das Register in der Wärmeleitschicht formentsprechend je nach Wärmeprofilen, Rohrformen oder dergleichen eingebunden, ohne dass Zwischenräume oder Lücken dazwischen gebildet sind. Gleichzeitig wird die Gegenform entsprechend der unebenen Form der Grundplatte an der unteren komprimierbaren Platte gebildet, so dass auch hier eine flächige, durchgängige Anlage der Wärmeleitschicht ohne Zwischenräume oder Hohlräume in dem Plattenelement realisiert werden kann. Eine sehr gute Leitung von Wärme oder Kälte seitens des Registers auf die Grundplatte hin ist damit gewährleistet. Ein Verlust von Wärme oder Kälte wird dadurch weitestgehend vermieden, und eine gute und gleichmäßige Abstrahlung von Kälte und Wärme über eine möglichst große Fläche auch aufgrund der unebenen Form der Grundplatte und der daran eingebundenen Wärmeleitschicht ist gegeben.

Gemäß einer weiteren vorteilhaften Ausgestaltung der Erfindung sind die Grundplatte, das Register und die Wärmeleitschicht miteinander gegenseitig verpresst und fest miteinander verbunden, insbesondere durch eine Verklebung. Durch das Verpressen wird eine möglichst kompakte Bauform ohne Lufteinschlüsse innerhalb des Plattenelements erreicht. Mit der fakultativen zusätzlichen Verklebung wird verhindert, dass die Einzelelemente sich später voneinander ablösen. Das kombinierte Verpressen und Verkleben kann vorzugsweise in einem einzigen Herstellungsvorgang erfolgen. Ein sicheres Zusammenbringen der einzelnen Bestandteile der Plattenelemente ist so mit relativ einfachen Herstellungsschritten gewährleistet, und es kann ein kompaktes und leicht weiterzuverarbeitendes Plattenelement bereitgestellt werden, das auch für großflächige Deckenheizungen oder Wandheizungen ebenso wie zu Kühlzwecken in größeren Gebäudebereichen optimal gestaltet ist. Durch den Vorgang eines Verpressens werden zudem sämtliche Vertiefungen in der unebenen dreidimensionalen Form der Grundplatte sicher ausgefüllt, so dass keine Luftbereiche oder Zwischenräume in den einzelnen Schichten mehr nach Fertigstellung der Plattenelemente vorhanden sind.

Gemäß einer weiteren vorteilhaften Ausgestaltung der Erfindung umfasst die Wärmeleitschicht ein ursprünglich flüssiges, sprühfähiges oder fließfähiges und im Endzustand verfestigtes wärmeleitendes Material zum formentsprechenden Anbinden an die unebene Grundplatte. Ein Beispiel für solch eine Wärmeleitschicht ist ein Gipsmaterial oder ein Verbundgipswerkstoff, welcher in flüssiger oder fließfähiger Form in eine beispielsweise wannenartige Grundplatte aus einem Metallblech oder ähnlichem nach Einlegen der Rohre des Registers eingefüllt oder eingebracht wird. Andere fließfähige oder sprühfähige Materialien als Einkomponenten- oder als Mehrkomponentenstoffe mit Aushärtern können ebenso eingesetzt werden, wie z. B. Paraffin oder Flüssigzement. Das fließfähige Material umschließt dabei vollständig in flüssigem oder weichem Zustand die Register oder dessen Rohrleitungen, und auch die unebene Form der Grundplatte wird gleichzeitig mit der entsprechenden Gegenform lückenlos ausgefüllt. Nach einem Verfestigen des Materials der Wärmeleitschicht aufgrund einer Abkühlung oder einer Aushärtereaktion ist so ein kompaktes fertiggestelltes Plattenelement vorgesehen, das eine direkte Einbindung und Integrierung der Register an den unebenen Grundplatten unabhängig von deren Form, Struktur oder Ausgestaltung der Vertiefungen oder Erhebungen erlaubt. Insbesondere ist auf diese Weise auch das Register mit dem Kühl- oder Heizmedium vollständig von allen Seiten sicher von dem wärmeleitenden Material der Wärmeleitschicht allseits umgeben, unabhängig davon, ob weitere Wärmeleitprofile, wie z. B. plattenförmige Auflagen, Rippen oder ähnliche die Wärmeleitung verbessernde Bauteile, an dem Register vorgesehen sind. Auch schwer zugängliche Hohlräume, Vertiefungen oder Bereiche sind somit sicher durch das Material der Wärmeleitschicht ausgefüllt. Eine ganzflächige Kontaktanlage zwischen der äußeren Grundplatte und der Wärmeleitschicht ist erfindungsgemäß gegeben. Gute Wärmeleitwerte sind so realisierbar.

Gemäß einer vorteilhaften Ausgestaltung der Erfindung ist die Grundplatte ein dreidimensional geprägtes oder verformtes Metallblech. Ein solch geprägtes Metallblech kann unterschiedliche dreidimensionale Formen aufweisen, welche durch gleichmäßige oder ungleichmäßige Erhebungen und Vertiefungen über die Fläche der Grundplatte hinweg verteilt gekennzeichnet ist. Die Grundplatte kann dabei sowohl eine strukturierte dreidimensionale Form als auch eine unstrukturierte dreidimensionale Form aufweisen. In all diesen Fällen handelt es sich bei der Form der Grundplatte um ein Plattenelement mit einer unebenen - d. h. nicht in einer gleichen Ebene sich erstreckenden - Ausdehnung des Platten- oder Blechmaterials. Bei einer solchen dreidimensionalen Form können sowohl geradlinige Vertiefungen und Erhebungen als auch schräge Vertiefungen oder Erhebungen jeweils vorgesehen sein, so dass sich ein insgesamt unebenes und in mehreren unterschiedlichen Winkeln und damit schwer für den Anschluss von plattenförmigen Wärmeleitmaterialien herzunehmendes Gebilde ergibt. Die Grundplatte kann beispielsweise eine geprägte Blechplatte aus einem Metallblech sein, die an den Rändern wannenförmig mit nach hinten bzw. oben vorragenden Randbereichen gebildet ist. Die Grundplatte kann beispielsweise als Einzelplatte oder für eine einzige Flächenheizung vorgesehen werden. Das Plattenelement kann auch mit Anschlüssen oder Ankopplungen für eine Anbindung und Zusammenschaltung mit mehreren benachbarten gleichartigen oder ähnlichen Plattenelementen versehen sein, so dass gesamte Gebäudedecken oder Gebäudewände als sogenannte Flächenheizungen oder Flächenkühlungen realisiert werden können. Das erfindungsgemäße Plattenelement weist insbesondere eine Grundplatte mit einer solch unebenen Form auf, welche auch mit einer Perforierung zu Zwecken einer weiteren akustischen Optimierung versehen sein kann. Andere Materialien und Formen von solchen unebenen Grundplatten, insbesondere auch kombinierte Verbundplatten, können ebenso im Rahmen der vorliegenden Erfindung eingesetzt werden.

Gemäß einer weiteren vorteilhaften Ausgestaltung der Erfindung ist das Register mit Wärmeleitprofilen innerhalb oder an der Wärmeleitschicht versehen. Bei einer in das Material der Wärmeleitschicht eingebetteten Form sind die Wärmeleitprofile somit direkt integriert in dem Material der Wärmeleitschicht. Bei einer Ausgestaltung, bei welcher eine vorgefertigte, mit der unebenen Gegenform gebildete Platte als Wärmeleitschicht eingesetzt wird, können die Wärmeleitprofile, wenn sie beispielsweise als Platten an Rohrleitungen realisiert sind, auch flächenbündig auf die Oberseite (gegenüberliegend von der Grundplatte) aufgelegt werden. Dafür ist dann eine ebene Oberfläche an der Wärmeleitschicht vorgesehen. Die unebene Gegenform befindet sich auf der Unterseite zu der Grundplatte hin, um in die entsprechende unebene Form der dreidimensional gebildeten Grundplatte formentsprechend und flächenbündig eingesetzt zu werden.

Gemäß einer weiteren vorteilhaften Ausgestaltung der Erfindung umfasst das Register Rohre für ein Heiz- oder Kühlmedium mit daran befestigten oder fest, beispielsweise durch Löten, Kleben oder Schweißen, angebrachten plattenförmigen Wärmeleitprofilen. Die plattenförmigen Wärmeleitprofile verbessern die Flächenabgabe von Wärme oder Kälte auf die Wärmeleitschicht hin und damit auf die zu dem Innenraum des Gebäudes hin weisende Grundplatte. Andere Formen von Wärmeleitprofilen, wie z. B. rippenförmige oder sternförmige Wärmeleitprofile, können ebenfalls an den Rohren angebracht oder befestigt sein.

Gemäß einer weiteren vorteilhaften Ausgestaltung der Erfindung ist eine Klebeschicht zum Verbinden von Grundplatte, Wärmeleitschicht und/oder Register miteinander vorgesehen. Hierdurch wird eine sichere feste, unlösbare Verbindung realisiert. Die Einzelteile des Plattenelements sind so miteinander fest verbunden, dass sie auch anschließend leicht transportiert, verarbeitet und verbaut werden können ohne die Gefahr einer Ablösung einzelner Bereiche und Bestandteile der Plattenelemente.

Gemäß einer weiteren vorteilhaften Ausgestaltung der Erfindung liegt das Register für das Heiz- oder Kühlmedium an einer von der unebenen Grundplatte abgewandten ebenen Oberfläche der Wärmeleitschicht auf. Die Wärmeleitschicht ist dafür speziell mit einer ebenen Rückseite oder Oberseite versehen, auf welche die Wärmeleitprofile und andere Anschlusselemente direkt angebracht werden können. Die auf die Seite der Grundplatte hin weisende Oberfläche hingegen ist uneben mit einer entsprechenden Gegenform in dreidimensionaler strukturierter oder unstrukturierter Ausgestaltung vorgesehen. Auf diese Weise ist die Anbindung und Wartung von weiteren Elementen, insbesondere der Heiz- und Kühlregister, leichter zu realisieren und erfordert keine vollständige Einbindung oder Einbettung in das Material der Wärmeleitschicht. Die Wärmeleitschicht und Grundplatte können so auch unabhängig von der Form eines Registers vorab hergestellt werden.

Gemäß einer weiteren vorteilhaften Ausgestaltung der Erfindung weist die Wärmeleitschicht eine zur unebenen, dreidimensionalen Form der Grundplatte entsprechend vorgefertigte unebene Gegenform in einem festen, wärmeleitenden Material auf. Das Material der Wärmeleitschicht ist also ein festes Material, welches gute Wärmeleiteigenschaften oder Kälteleiteigenschaften hat. Das Material wird durch Formgebungsschritte, wie z. B. mechanische Bearbeitung oder dergleichen, so bearbeitet, dass es eine unebene Gegenform entsprechend zu der dreidimensionalen unebenen Form der Grundplatte aufweist. Die so vorgefertigte unebene Gegenform der Wärmeleitschicht muss einfach in die entsprechenden unebenen Grundplatten eingesetzt und damit verbunden werden, beispielsweise über eine Verklebung oder andere Halterungen oder Befestigungsmittel. Auf den dann eingesetzten, aus Festmaterial bestehenden Wärmeleitschichten können die weiteren Elemente, wie z. B. das Register für das Kühl- oder Heizmedium, direkt auf ebenen Oberflächen ohne Probleme angebracht werden. Bei Ausarbeiten von entsprechenden Nuten oder Rillen kann das Register auch in das Material einer solchen Wärmeleitschicht integriert werden. Auch eine leichte Fixierung und Befestigung an Decken oder Wänden ist hierdurch möglich, ohne dass sich unerwünschte Zwischenräume oder Hohlräume dabei ergeben.

Weitere Vorteile, Merkmale und Aspekte der vorliegenden Erfindung werden im Folgenden mehr im Detail anhand von mehreren Ausführungsbeispielen unter Bezugnahme auf die beigefügten Zeichnungen beschrieben werden. In den Zeichnungen zeigen:

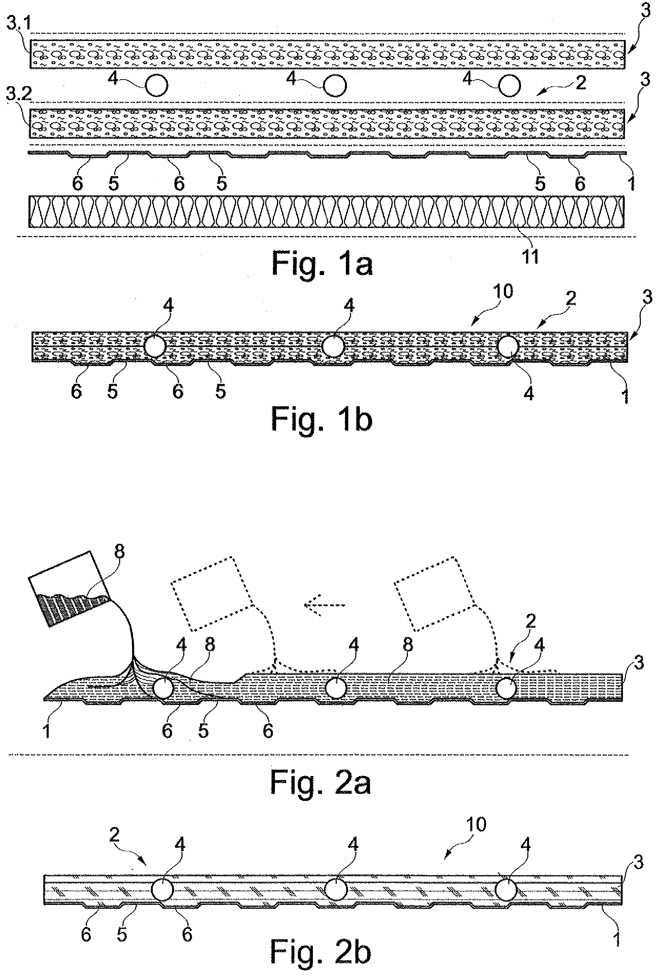

- Fig. 1a, Fig. 1b: jeweilige Schnittansichten eines ersten Ausführungsbeispiels eines erfindungsgemäßen Plattenelements für Flächenheizungen mit zweiteiliger, plattenförmiger Wärmeleitschicht und integriertem Heiz- oder Kühlregister, wobei Fig. 1a eine auseinandergezogene Explosionsdarstellung und Fig. 1b den zusammengebauten Zustand des Plattenelements zeigt;
- Fig. 2a, Fig. 2b: jeweilige Schnittansichten eines zweiten Ausführungsbeispiels eines erfindungsgemäßen Plattenelements mit einer flüssigen, aushärtbaren oder erstarrten Masse für die Herstellung der Wärmeleitschicht, wobei Fig. 2a den Zustand der Herstellung und Fig. 2b das fertiggestellte Plattenelement mit integriertem Heiz- oder Kühlregister zeigt;

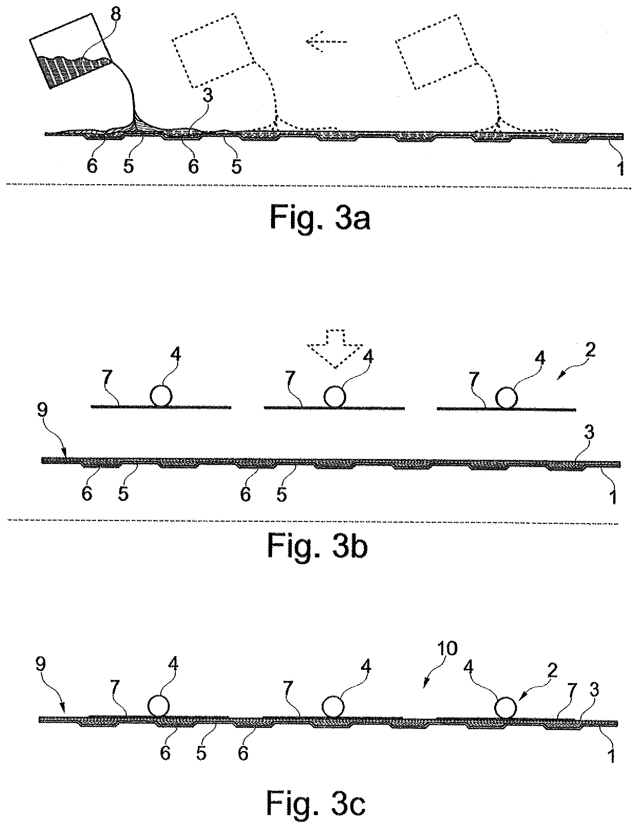

- Fig. 3a bis Fig. 3c: jeweilige Schnittansichten eines dritten Ausführungsbeispiels eines erfindungsgemäßen Plattenelements für Flächenheizungen mit einem Heiz- oder Kühlregister mit Wärmeleitprofilen, wobei Fig. 3a und 3b den Zustand der Herstellung des Plattenelements und Fig. 3c das fertiggestellte Plattenelement zeigen; und

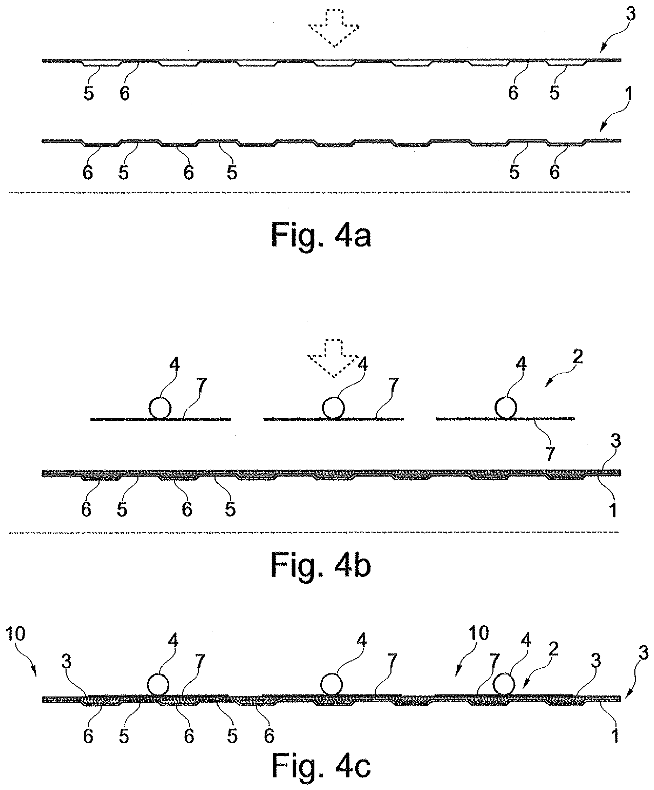

- Fig. 4a bis Fig. 4c: jeweilige Schnittansichten eines vierten Ausführungsbeispiels eines erfindungsgemäßen Plattenelements mit vorgeformter unebener Wärmeleitschicht, wobei Fig. 4a und Fig. 4b den Herstellungsvorgang und Fig. 4c das fertiggestellte Plattenelement mit angebrachtem Heiz- oder Kühlregister am Wärmeleitprofil zeigen.

Die Fig. 1a und Fig. 1b zeigen in Schnittansichten ein erstes Ausführungsbeispiel eines erfindungsgemäßen Plattenelements 10 für Flächenheizungen oder -kühlungen von Decken oder Wänden von Gebäudeinnenräumen. Das Plattenelement 10 umfasst mindestens eine Grundplatte 1, ein mit einem Heiz- oder Kühlmedium durchströmtes Register 2 sowie eine Wärmeleitschicht 3, die mit der Grundplatte 1 verbunden ist. In der Fig. 1a ist das Plattenelement 10 dieses ersten Ausführungsbeispiels in einer auseinandergezogenen Explosionsdarstellung gezeigt, bevor die einzelnen Bestandteile, nämlich die Grundplatte 1, das Register 2 und die Wärmeleitschicht 3, auf einer dafür vorgesehenen Auflage 11 durch beispielsweise eine Pressvorrichtung miteinander verbunden sind, während in der Fig. 1b das fertiggestellte erfindungsgemäße Plattenelement 10 nach einem Verbinden und Verpressen der Grundplatte 1 mit der Wärmeleitschicht und dem Register 2 gezeigt ist.

Die Plattenelemente 10 gemäß der Erfindung weisen eine insbesondere metallische Grundplatte 1 auf, welche eine unebene, dreidimensionale Form in ihrer Flächenausdehnung aufweist, wie es in den Fig. 1a, 1b durch die Erhebungen 5 und Vertiefungen 6 exemplarisch dargestellt ist. Die Grundplatte 1 kann ein dreidimensional geprägtes metallisches Blech sein oder eine andere Platte, welche eine unebene, dreidimensionale Form in der Flächenausdehnung hat. Die unebene dreidimensionale Form der Grundplatte 1 kann eine gleichmäßige Form mit einem strukturierten Aufbau beispielsweise mit gleichmäßigen quadratischen Erhebungen 5 und Vertiefungen 6 sein oder kann alternativ auch eine unstrukturierte Form mit verschiedenen Winkeln und Ausgestaltungen der Erhebungen 5 und Vertiefungen 6 in ungleichmäßiger Form beispielsweise als eine Art Knittermuster aufweisen.

Auf die unebene Grundplatte 1 des Plattenelements 10 wird eine Wärmeleitschicht 3 aus einem eine Wärmeleitung oder Kälteleitung fördernden Material oder Masse aufgebracht, befestigt oder damit verbunden. Die Wärmeleitschicht 3 kann eine Schicht aus mehreren unterschiedlichen Einzelelementen sein oder eine einzige Wärmeleitschicht 3 aus einer Platte oder Masse sein. Ferner ist in dem erfindungsgemäßen Plattenelement 10 ein Heiz- oder Kühlregister 2 für ein Strömenlassen eines Heiz- oder Kühlmediums vorhanden, welches in diesem ersten Ausführungsbeispiel mit Rohren 4 exemplarisch eingezeichnet ist, die mäanderförmig in dem Plattenelement 10 verlegt werden und einen Zulauf und einen Ablauf für ein Anschließen an ein Wärmeträgerfluid (nicht gezeigt in den Zeichnungen) haben. Durch das Wärmeträgermedium kann eine in der Fläche wirkende optimierte Heizwirkung oder Kühlwirkung mit dem Plattenelement 10 gemäß der Erfindung erzielt werden, die über die Wärmeleitschicht 3 und die unebene Grundplatte 1 mit einer relativ großen Fläche möglichst direkt in den Innenraum des Gebäudes weitergeleitet wird. Dafür ist erfindungsgemäß die Wärmeleitschicht 3 mit einer entsprechend unebenen Gegenform an der Unterseite der Wärmeleitschicht 3 gebildet, so dass sie formschlüssig in die unebene Form der Grundplatte 1 nach einem Montieren eingreift und die flächige durchgängige Verbindung und Anbindung der Wärmeleitschicht 3 an der Grundplatte 1 gewährleistet, ohne dass es Zwischenräume oder Lufträume in den unebenen Bereichen der Erhebungen 5 und Vertiefungen 6 der Grundplatte 1 gibt.

Nach Fig. 1a besteht bei diesem ersten Ausführungsbeispiel die Wärmeleitschicht 3 aus zwei Platten 3.1, 3.2 eines wärmeleitenden Materials, zwischen welchen das Register 2 mit den Rohren 4 für das Kühl- oder Heizmedium sandwichförmig eingelegt wird. Anschließend werden die Wärmeleitschicht 3, das Register 2 und die am unteren Bereich liegende Grundplatte 1 miteinander durch eine Druckanwendung auf einer Auflage 11 verpresst, so dass sich im Endzustand ein kompaktes und relativ dünnes flächiges Plattenelement 10 gemäß der Fig. 1 ergibt, bei welchem sowohl die Rohre 4 des Registers 2 als auch die unebene Oberfläche mit den Vertiefungen 6 und den Erhöhungen 5 der Grundplatte 1 vollständig mit dem Material der Wärmeleitschicht 3 ausgefüllt sind. Die Wärmeleitschicht 3 kann bei diesem Ausführungsbeispiel zwei oder mehr Platten 3.1, 3.2 aus einem gut wärmeleitenden komprimierbaren Material aufweisen. Beispielsweise können verdichtete Graphitplatten oder aus anderem gut wärmeleitendem Schaummaterial gebildete Schaumplatten verwendet werden, um das Einpressen und damit einhergehende Komprimieren des Materials der Wärmeleitschicht 3 für die Rohre 4 in dem fertiggestellten Plattenelement 10 zu realisieren. Das Register 2 für das Heiz- oder Kühlmedium selbst kann beispielsweise eine mäanderförmig verlegte Rohrschlange aus Kupferrohren 4 sein, welche mit entsprechenden Anschlüssen für den Zulauf und den Ablauf des Wärmeträgermediums versehen sind. Alternativ können Rohrschlangen aus Edelstahl oder Kunststoff vorgesehen sein.

Die erfindungsgemäßen Plattenelemente 10 weisen eine sehr gute Wärmeabgabeeigenschaft auf, da sie in der Fläche durch die unebene Form weiter vergrößert sind gegenüber lediglich ebenen, flachen derartigen Plattenelementen. Die erfindungsgemäßen Plattenelemente können durch das formschlüssige Einbinden der Wärmeleitschicht 3 mit entsprechend unebenen Gegenformen zu der unebenen Form der Grundplatte 1 relativ kostengünstig hergestellt werden. Die Bauhöhe der Plattenelemente 10 ist relativ gering, ebenso wie das für die Plattenelemente 10 erforderliche Gesamtgewicht aufgrund der vergleichsweise geringen Anzahl von erforderlichen Einzelteilen. Mit solch einer unebenen Form in der Fläche von der Grundplatte 1 lassen sich auch strukturierte oder unstrukturierte spezielle Oberflächen von derartigen Plattenelementen 10 realisieren, die Vorteile hinsichtlich der Akustik in den Innenräumen haben und welche nicht zuletzt auch die Realisierung von bestimmten optischen Effekten und Gestaltungen der Innenräume ermöglichen. Insgesamt ist das erfindungsgemäße Plattenelement 10 damit sehr vielfältig einsetzbar und kann auch weitere, die Akustik verbessernde Maßnahmen mit umfassen, beispielsweise indem die Grundplatte 1 eine Perforierung oder Lochmuster aufweist. Das Material der Grundplatte 1 kann beispielsweise ein metallisches Blech sein, das durch einfache Stanzvorgänge oder Prägeformgebung mit der unebenen dreidimensionalen Form hergestellt werden kann. Die Grundplatte 1 der Plattenelemente 10 kann an den Seiten wannenförmig nach oben ragende, rechtwinklig hochgebogene Ränder aufweisen, so dass die Wärmeleitschicht 3 vollständig in dem Inneren der so gebildeten wannenartigen Grundplatten 1 aufgenommen werden kann.

Die Plattenelemente 10 gemäß der Erfindung haben den Vorteil, dass eine deutlich verbesserte Wärme- oder Kälteabgabe mit solchen Flächenheizungen oder -kühlungen erreicht werden kann. Ferner lässt sich das Register 2 für die Wärmeleittechnik leicht in unterschiedlichen Formen derartiger Grundplatten 1 der Plattenelemente 10 ohne konstruktive Unterschiede der Kopplung einbinden und fixieren. Die Rohre 4 des Registers 2 für die Wärmeleittechnik können beispielsweise mit oder ohne Wärmeleitprofile 7 (vgl. nachfolgende Ausführungsbeispiele) im Inneren des Materials der Wärmeleitschicht 3 eingebunden werden oder an dem Material der Wärmeleitschicht 3 aufgebracht und fixiert werden. Nicht zuletzt bietet das so geformte Plattenelement 10 auch Vorteile hinsichtlich der Montage und Fixierung an Decken oder Wänden von Gebäuden: Die Plattenelemente 10 können relativ nahe an der jeweiligen Wand oder der Decke des Gebäudes angebracht werden, beispielsweise durch seitliche Halterungen oder Klammern an den Rändern der Grundplatte 1. Dabei ist es nicht erforderlich, für das Register 2 der Kühltechnik einen zusätzlichen Zwischenraum oder offenen Raum innerhalb der Plattenelemente 10 vorzusehen. Dadurch ergeben sich deutlich geringere Bauhöhen derartiger Plattenelemente 10 für eine optimierte Ausgestaltung derartiger Flächenheizungen oder -kühlungen.

In Fig. 2a und Fig. 2b sind schematisch in jeweiligen seitlichen Schnittansichten ein zweites Ausführungsbeispiel eines erfindungsgemäßen Plattenelements 10 sowie die Schritte zu seiner Herstellung dargestellt. Das Plattenelement 10 gemäß diesem zweiten Ausführungsbeispiel umfasst als Wärmeleitschicht 3 eine wärmeleitende Masse 8 oder Flüssigkeit, die in den Bereich der Grundplatte 1 mit der unebenen Oberfläche mit Erhebungen 5 und Vertiefungen 6 oder anderen Unebenheiten nach Einlegen des Registers 2 für das Heiz- oder Kühlmedium in diesem Beispiel in Form von Rohren 4 eingegossen wird. Das ursprünglich flüssige wärmeleitende Material 8 ist somit zunächst fließfähig und wird nach Einlegen des Registers 2 auf die Grundplatte 1 eingegossen und härtet anschließend aus, wie es in der Fig. 2a schematisch gezeigt ist. Als eine wärmeleitende Masse 8 für das Material in der Wärmeleitschicht 3 kann beispielsweise eine flüssige, sprühfähige oder fließfähige Masse oder Stoffzusammensetzung mit guten Wärmeleiteigenschaften verwendet werden, wie z. B. ein Gipswerkstoff mit oder ohne die Wärmeleitung erhöhenden Partikeln oder Granulaten. Andere Materialien als Einstoff- oder Mehrstoffkomponenten können ebenfalls hierzu verwendet werden. Zum Beispiel sind auch Paraffin oder Flüssigzement als mögliche Materialien für die Wärmeleitschicht verwendbar.

In der Fig. 2b ist dann nach dem Aushärten der Masse 8 der Wärmeleitschicht 3 das fertiggestellt Plattenelement 10 gezeigt, bei welchem die unebenen Formen der Grundplatte 1 mit den Erhebungen 5 und Vertiefungen 6 vollständig ausgefüllt und als formidentische Gegenform abgebildet sind. Ebenso sind die Rohre 4 des Registers 2 vollständig ohne Zwischenräume von dem wärmeleitenden Material der Wärmeleitschicht 3 umgeben. Bei diesem zweiten Ausführungsbeispiel der Erfindung ist das Plattenelement 10 mit einem Kühlregister 2 versehen, dass vollständig in dem Material der Wärmeleitschicht 3 eingebettet und von diesem umgeben ist. Ferner sind die Rohre 4 des Registers mindestens teilweise direkt anliegend an der unebenen Grundplatte 1 in Fig. 2a gezeigt. Alternativ kann das Register 2 auch nur teilweise eingebettet und auch alternativ nur außerhalb von dem Material der Wärmeleitschicht 3 vorgesehen sein. Auch lassen sich weitere Anbindungen oder Verbindungsstege als Wärmeleitprofile 7 (vgl. nachfolgende Ausführungsbeispiele) an den Rohren 4 des Registers 2 anbringen, um so eine noch bessere Wärmeübertragung oder Kälteübertragung von dem Wärmeträgermedium auf die zum Innenraum des Gebäudes weisende Fläche der Plattenelemente 10 (Unterseite von Grundplatte 1 in den Figuren) zu erreichen.

Ein drittes Ausführungsbeispiel eines erfindungsgemäßen Plattenelements 10 ist in den schematischen Schnittdarstellungen der Fig. 3a, Fig. 3b und Fig. 3c gezeigt. Auch bei diesem dritten Ausführungsbeispiel wird die Wärmeleitschicht 3 aus einer ursprünglich fließfähigen oder flüssigen wärmeleitenden Masse 8 hergestellt, welche in die uneben geformte Grundplatte 1 eingegossen wird (vgl. Fig. 3a). Nach einem Aushärten der ursprünglich fließfähigen Masse 8 des Materials der Wärmeleitschicht 3 wird an der Oberseite der Wärmeleitschicht 3 eine ebene Oberfläche 9 für den Anschluss von dem Register 2 für das Kühl- oder Heizmedium gebildet (vgl. Fig. 3b und Fig. 3c). Bei dieser dritten Ausführungsform ist die Wärmeleitschicht 3 vergleichsweise gering im Durchmesser, so dass noch eine kompaktere Bauform und leichtere Plattenelemente 10 mit optimierter thermischer Leistung realisiert werden können. Das ursprünglich flüssige wärmeleitfähige Material 8 der Wärmeleitschicht 3 wird einfach in einer vergleichsweise dünnen Schicht bis zum Auffüllen der unebenen Form der Grundplatte 1 eingefüllt, so dass die Vertiefungen 6 vollständig ausgefüllt sind und auch die Erhebungen 5 vom Material der Wärmeleitschicht abgedeckt sind. Nach einem Aushärten ergibt sich eine quasi ebene Oberfläche der fest mit der Grundplatte 1 verbundenen Wärmeleitschicht 3. Auf diese ebene Oberfläche 9 kann dann die Kühltechnik in Form von beispielsweise einem Register 2 aus Rohren 4 und Wärmeleitprofilen 7 (fakultativ) einfach aufgelegt und durch Verkleben oder auf andere Weise dort befestigt werden. Es ergibt sich damit eine kompakte Bauform von im Hinblick auf die Wärme- und Kälteabgabe optimierten Plattenelementen 10 für Flächenheizungen oder -kühlungen, welche auf der zum Innenraum weisenden Seite (Unterseite in den Figuren der Zeichnungen) eine dreidimensionale, unebene Form der Grundplatte 1 haben, beispielsweise in Form von regelmäßigen Erhebungen 5 und Vertiefungen 6 (strukturierte 3D-Oberfläche) oder einer anderen unebenen Form in unstrukturierter oder ungleichmäßiger Ausgestaltung.

Die erfindungsgemäßen Plattenelemente 10 haben damit nicht nur Vorteile hinsichtlich der integrierten Heiz- und Kühltechnik von derartigen Flächenheizungen, sondern bieten gleichermaßen auch akustische Vorteile aufgrund der unebenen Ausgestaltung der Grundplatte 1. Die Plattenelemente 10 können auch bei diesem Ausführungsbeispiel mit oder ohne zusätzliche Perforierungen zur weiteren Erhöhung der akustischen Wirkung und Verbesserung eines Schallschutzes versehen werden. Die dargestellten Ausführungsbeispiel können auch beliebig miteinander kombiniert werden, beispielsweise in der Form, dass das dritte Ausführungsbeispiel mit einer fließfähigen Masse 8 verwendet wird, welche vollständig eine Einbettung des Registers 2 erlaubt. Alternativ kann auch ein fließfähiges Material als eine erste Schicht 3.1 der Wärmeleitschicht 3 vorgesehen werden und als eine zweite Schicht 3.2 ein plattenförmiges, komprimierbares wärmeleitfähiges Material, wie es in dem ersten Ausführungsbeispiel der Fig. 1a, 1b eingesetzt wird. Die Kombination und Variation der Plattenelemente 10 dieser bisher dargestellten Ausführungsbeispiele ist daher vielfältig und kann entsprechend je nach Bedarf leicht variiert werden, ohne zu starken konstruktiven Änderungen und damit Kostenerhöhungen zu führen.

In Fig. 4a, Fig. 4b und Fig. 4c ist ein viertes Ausführungsbeispiel eines erfindungsgemäßen Plattenelements 10 für Flächenheizungen oder -kühlungen von Gebäudedecken oder -wänden mit einem Heiz- oder Kühlregister 2 in verschiedenen Seitenansichten bzw. Schnittansichten dargestellt. Im Unterschied zu den vorherigen beschriebenen Ausführungsbeispielen ist hier die Wärmeleitschicht 3 aus einer mit einer unebenen Gegenform vorab hergestellten dreidimensionalen Form vorgesehen, wie in Fig. 4a in der Explosionsansicht vor dem Zusammenfügen der Wärmeleitschicht 3 und der Grundplatte 1 gezeigt. Die Wärmeleitschicht 3 kann aus jedem eine Wärmeleitung befördernden Material hergestellt sein und wird beispielsweise durch eine Bearbeitung mit entsprechenden Erhebungen 6 und Vertiefungen 5 zum Herstellen der entsprechenden Gegenform zu der unebenen Form der Grundplatte 1 mit solchen Erhebungen 5 und Vertiefungen 6 hergestellt. Die vorgefertigte Platte der Wärmeleitschicht 3 wird dann anschließend auf die Grundplatte 1 eingesetzt und durch den Formschluss flächig durchgängig ohne Zwischenräume damit verbunden. Beispielsweise kann eine Verbindung auch zusätzlich mit einer alternativen Klebeschicht hergestellt werden, so dass dann die Elemente fest miteinander gekoppelt sind. Die vorgefertigte Platte der Wärmeleitschicht 3 dieses Ausführungsbeispiels kann beispielsweise aus einem gipsartigen Plattenmaterial hergestellt werden, das mit entsprechenden Fräsbearbeitungen oder Verformungen (Gießen) die Erhebungen 6 und Vertiefungen 5 mit der notwendigen Gegenform zu der unebenen dreidimensionalen Form der Grundplatte 1 erhält. Die Grundplatte 1 selbst kann beispielsweise ein Metallblech sein und durch einen Prägeschritt mit der unebenen dreidimensionalen Gestalt mit den Erhebungen 5 und den Vertiefungen 6 gebildet sein.

Nach dem Verbinden von Wärmeleitschicht 3 und Grundplatte 1 mit oder ohne dazwischenliegender Klebeschicht wird das Register 2 auf die dann ebene Oberfläche der Wärmeleitschicht 3 aufgelegt (vgl. Fig. 4b). Das Register 2 kann beispielsweise mit Rohren 4 für das Kühl- oder Heizmedium versehen sein, welches mit oder ohne zusätzliches Wärmeleitprofil 7, das hier in Form von geraden Profilplatten an der Unterseite der Rohre 4 exemplarisch gezeigt ist, versehen ist. Nach einem Anbringen der Register 2 auf die Oberseite der Wärmeleitschicht 3 entsteht so das fertiggestellte Plattenelement 10 gemäß der Erfindung nach diesem vierten Ausführungsbeispiel. Die gleichen Vorteile hinsichtlich der Kompaktheit, Leichtigkeit und verbesserten Wärmeleiteigenschaften wie bei den vorherigen Ausführungsbeispielen treffen auch auf dieses Ausführungsbeispiel zu. Nicht zuletzt bietet das so gebildete erfindungsgemäße Plattenelement 10 auch erhebliche Vorteile hinsichtlich der Erstreckung und Größe der Außenfläche zum Innenraum hin durch die dreidimensionale strukturierte oder unstrukturierte Formgebung der Grundplatte 1. Die effektive thermische Flächenausdehnung ist dadurch vergrößert. Auch werden dadurch akustische Vorteile neben den optischen Variationsmöglichkeiten geboten, da die Schallwellen durch die dreidimensionale unebene Form zusätzlich weiter gebrochen werden. Es ist damit erfindungsgemäß nicht unbedingt erforderlich, zusätzliche weitere Mittel zur Vermeidung von akustischen Nachteilen vorzusehen. Die erfindungsgemäßen Plattenelemente 10 integrieren quasi sowohl hinsichtlich der Heiz- und Kühltechnik optimierte Eigenschaften als auch akustische Verbesserungen in einem dennoch überraschend einfach aufgebauten und relativ kostengünstig herzustellenden Plattenelement 10.

Auch dieses vierte Ausführungsbeispiel kann mit den Aspekten und Merkmalen der vorherigen Ausführungsbeispiele beliebig kombiniert werden. Beispielsweise können auch hier die Register 2 vollständig im Inneren des Materials einer Wärmeleitschicht 3 integriert sein, entweder durch zusätzliche Platten 3.1, 3.2 oder durch eine zusätzliche ursprünglich fließfähige Masse 8 aus wärmeleitfähigem Material, welche nach der in der Fig. 4c gezeigten Form noch extra aufgebracht wird.

## Patentansprüche

1. Plattenelement (10) für Flächenheizungen oder -kühlungen von Decken oder Wänden von Gebäudeinnenräumen mit einer zum Innenraum weisenden metallischen Grundplatte (1) und mit einem damit direkt oder indirekt verbundenen Register (2) für ein Heiz- oder Kühlmedium, welches durch das Register (2) strömt, und mit mindestens einer Wärmeleitschicht (3) zwischen der Grundplatte (1) und dem Register (2) für eine Wärmeübertragung zwischen Register (2) und Grundplatte (1), **dadurch gekennzeichnet, dass** die Grundplatte (1) eine in der gesamten Flächenausdehnung dreidimensionale, unebene vorstehende oder zurückspringende Form mit Erhebungen (5) und Vertiefungen (6) aufweist und dass die Wärmeleitschicht (3) auf der zur Grundplatte (1) hin weisenden Seite eine der unebenen Form der Grundplatte (1) entsprechende Gegenform für ein formschlüssiges Ineinandergreifen und durchgängig flächiges Anbinden der Wärmeleitschicht (3) an der Grundplatte (1) zusammen mit dem Register (2) zum Heizen oder Kühlen aufweist oder im Zusammenbau von Grundplatte (1) und Wärmeleitschicht (3) bildet.

2. Plattenelement (10) nach Anspruch 1, **dadurch gekennzeichnet, dass** das Register (2) für das Heiz- oder Kühlmedium über die Fläche des Plattenelements (10) hinweg verteilt angeordnete Leitungen, Kanäle oder Rohre (4), insbesondere Rohre (4) in einer mäanderartigen Form, umfasst.

3. Plattenelement (10) nach Anspruch 1 oder 2, **dadurch gekennzeichnet, dass** das Register (2) mindestens teilweise in dem Material der Wärmeleitschicht (3) eingebettet und von dieser formschlüssig umschlossen ist.

4. Plattenelement (10) nach einem der vorangegangenen Ansprüche, **dadurch gekennzeichnet, dass** die Wärmeleitschicht (3) ein komprimierbares, wärmeleitendes Material zum Realisieren der unebenen Gegenform entsprechend der unebenen Form der Grundplatte (1) aufweist.

5. Plattenelement (10) nach einem der vorangegangenen Ansprüche, **dadurch gekennzeichnet, dass** die Wärmeleitschicht (3) als mindestens zweiteilige, komprimierbare Platten (5, 6) aus wärmeleitfähigem Material vorgesehen ist zum sandwichartigen Aufnehmen des Registers (2) zwischen den Platten (5, 6) und zum formentsprechenden Anbinden mittels entsprechender Gegenform an die unebene Grundplatte (1).

6. Plattenelement (10) nach einem der vorangegangenen Ansprüche, **dadurch gekennzeichnet, dass** die Grundplatte (1), das Register (2) und die Wärmeleitschicht (3) miteinander gegenseitig verpresst und fest, insbesondere durch Verklebung, verbunden sind.

7. Plattenelement (10) nach einem der vorangegangenen Ansprüche, **dadurch gekennzeichnet, dass** die Wärmeleitschicht (3) ein ursprünglich flüssiges, sprühfähiges oder fließfähiges und im Endzustand verfestigtes wärmeleitendes Material zum formentsprechenden Anbinden an die unebene Grundplatte (1) umfasst.

8. Plattenelement (10) nach einem der vorangegangenen Ansprüche, **dadurch gekennzeichnet, dass** die Grundplatte (1) ein dreidimensional geprägtes oder verformtes Metallblech, insbesondere mit einer Perforierung, ist.

9. Plattenelement (10) nach einem der vorangegangenen Ansprüche, **dadurch gekennzeichnet, dass** das Register (2) mit Wärmeleitprofilen (7) innerhalb oder an der Wärmeleitschicht (3) versehen ist.

10. Plattenelement (10) nach einem der vorangegangenen Ansprüche, **dadurch gekennzeichnet, dass** das Register (2) Rohre (4, 5) für ein Heiz- oder Kühlmedium mit daran befestigten oder fest angebrachten plattenförmigen Wärmeleitprofilen (7) umfasst,

11. Plattenelement (10) nach einem der vorangegangenen Ansprüche, **dadurch gekennzeichnet, dass** eine Klebeschicht zum Verbinden von Grundplatte (1), Wärmeleitschicht (3) und/oder Register (2) miteinander vorgesehen ist.

12. Plattenelement (10) nach einem der Ansprüche 1, 2, 4 bis 11, **dadurch gekennzeichnet, dass** das Register (2) für das Heiz- oder Kühlmedium an einer von der unebenen Grundplatte (1) abgewandten ebenen Oberfläche der Wärmeleitschicht (3) aufliegt.

13. Plattenelement (10) nach einem der vorangegangenen Ansprüche, **dadurch gekennzeichnet, dass** die Wärmeleitschicht (3) eine zur unebenen, dreidimensionalen Form der Grundplatte (1) entsprechend vorgefertigte unebene Gegenform in einem festen wärmeleitenden Material aufweist.

## Claims

1. Plate element (10) for surface heating or cooling of ceilings or walls of building interiors, with a metallic base plate (1) facing the interior and with a register (2), directly or indirectly connected thereto, for a heating or cooling medium flowing through the register (2), and with at least one heat-conducting layer (3) between the base plate (1) and the register (2) for heat transfer between the register (2) and the base plate (1), **characterised in that** the base plate (1) has a three-dimensional, uneven, protruding or recoiling shape over the entire surface area, with elevations (5) and depressions (6), and **in that** the heat-conducting layer (3), on the side facing the base plate (1), forms a counter-shape corresponding to the uneven shape of the base plate (1) for positive interlocking and continuous flat bonding of the heat-conducting layer (3) to the base plate (1) together with the register (2) for heating or cooling, or in the assembly of the base plate (1) and heat-conducting layer (3).

2. Plate element (10) according to claim 1, **characterised in that** the register (2) for the heating or cooling medium comprises lines, channels or pipes (4), in particular pipes (4) in a meandering shape, arranged distributed over the surface of the plate element (10).

3. Plate element (10) according to claim 1 or 2, **characterised in that** the register (2) is at least partially embedded in the material of the heat-conducting layer (3) and is enclosed by the latter in a form-fitting manner.

4. Plate element (10) according to any of the preceding claims, **characterised in that** the heat-conducting layer (3) has a compressible, heat-conducting material for realising the uneven counter-shape corresponding to the uneven shape of the base plate (1).

5. Plate element (10) according to any of the preceding claims, **characterised in that** the heat-conducting layer (3) is provided as at least two-part, compressible plates (5, 6) made of thermally conductive material for the sandwich-like accommodation of the register (2) between the plates (5, 6) and for form-fitting connection to the uneven base plate (1) by means of a corresponding counter-shape.

6. Plate element (10) according to any of the preceding claims, **characterised in that** the base plate (1), the register (2) and the heat-conducting layer (3) are mutually pressed together and firmly connected, in particular by adhesive bonding.

7. Plate element (10) according to any of the preceding claims, **characterised in that** the heat-conducting layer (3) comprises an originally liquid, sprayable or flowable and in the end state solidified heat-conducting material for form-fitting connection to the uneven base plate (1).

8. Plate element (10) according to any of the preceding claims, **characterised in that** the base plate (1) is a three-dimensionally embossed or deformed metal sheet, in particular with a perforation.

9. Plate element (10) according to any of the preceding claims, **characterised in that** the register (2) is provided with heat-conducting profiles (7) within or on the heat-conducting layer (3).

10. Plate element (10) according to any of the preceding claims, **characterised in that** the register (2) comprises pipes (4, 5) for a heating or cooling medium with plate-shaped heat-conducting profiles (7) attached thereto or fixedly attached thereto.

11. Plate element (10) according to any of the preceding claims, **characterised in that** an adhesive layer is provided for connecting the base plate (1), heat-conducting layer (3) and/or register (2) to each other.

12. Plate element (10) according to any of claims 1, 2, 4 to 11, **characterised in that** the register (2) for the heating or cooling medium rests on a flat surface of the heat-conducting layer (3) facing away from the uneven base plate (1).

13. Plate element (10) according to any of the preceding claims, **characterised in that** the heat-conducting layer (3) has an uneven counter-shape in a solid heat-conducting material corresponding to the uneven, three-dimensional shape of the base plate (1).

## Revendications

1. Élément en plaque (10) destiné au chauffage ou au refroidissement de surfaces de plafonds ou de murs de locaux intérieurs de bâtiments, comprenant une plaque de base métallique (1) tournée vers l'intérieur et un registre (2) relié directement ou indirectement à celle-ci pour un fluide de chauffage ou de refroidissement s'écoulant à travers le registre (2), ainsi qu'au moins une couche thermoconductrice (3) disposée entre la plaque de base (1) et le registre (2) pour le transfert de chaleur entre le registre (2) et la plaque de base (1), **caractérisé en ce que** la plaque de base (1) présente une forme tridimensionnelle irrégulière, en relief et/ou en creux sur toute sa surface, avec des bosses (5) et des dépressions (6), et **en ce que** la couche thermoconductrice (3) présente, sur son côté tourné vers la plaque de base (1), une forme irrégulière correspondant à celle de la plaque de base (1), de manière à permettre un emboîtement par complémentarité de forme et un contact plan continu de la couche thermoconductrice (3) avec la plaque de base (1), le tout formant, avec le registre (2), un assemblage destiné au chauffage ou au refroidissement, ou bien cette forme se crée lors de l'assemblage de la plaque de base (1) et de la couche thermoconductrice (3).

2. Élément en plaque (10) selon la revendication 1, **caractérisé en ce que** le registre (2) destiné au fluide de chauffage ou de refroidissement comprend des conduits, canaux ou tuyaux (4), en particulier des tuyaux (4) disposés en méandres, répartis sur la surface de l'élément en plaque (10).

3. Élément en plaque (10) selon l'une quelconque des revendications 1 ou 2, **caractérisé en ce que** le registre (2) est au moins partiellement noyé dans le matériau de la couche thermoconductrice (3) et entouré par celle-ci de manière complémentaire en forme.

4. Élément en plaque (10) selon l'une quelconque des revendications précédentes, **caractérisé en ce que** la couche thermoconductrice (3) comprend un matériau thermoconducteur compressible permettant de former la contre-forme irrégulière correspondant à la forme irrégulière de la plaque de base (1).

5. Élément en plaque (10) selon l'une quelconque des revendications précédentes, **caractérisé en ce que** la couche thermoconductrice (3) est constituée de plaques compressibles (5, 6) en au moins deux parties, réalisées en matériau thermoconducteur, de manière à recevoir le registre (2) en sandwich entre les plaques (5, 6) et à être fixée par moulage conforme à la plaque de base (1) de forme irrégulière.

6. Élément en plaque (10) selon l'une quelconque des revendications précédentes, **caractérisé en ce que** la plaque de base (1), le registre (2) et la couche thermoconductrice (3) sont pressés les uns contre les autres et fixés de manière permanente, notamment par collage.

7. Élément en plaque (10) selon l'une quelconque des revendications précédentes, **caractérisé en ce que** la couche thermoconductrice (3) est constituée d'un matériau initialement liquide, pulvérisable ou fluide thermoconducteur, qui est solidifié à l'état final pour former une liaison conforme en forme avec la plaque de base (1) de surface irrégulière.

8. Élément en plaque (10) selon l'une quelconque des revendications précédentes, **caractérisé en ce que** la plaque de base (1) est une tôle métallique emboutie ou déformée tridimensionnellement, notamment pourvue d'une perforation.

9. Élément en plaque (10) selon l'une quelconque des revendications précédentes, **caractérisé en ce que** le registre (2) comporte, à l'intérieur ou sur la couche thermoconductrice (3), des profils thermoconducteurs (7).

10. Élément en plaque (10) selon l'une quelconque des revendications précédentes, **caractérisé en ce que** le registre (2) comprend des tubes (4, 5) pour un fluide de chauffage ou de refroidissement, sur lesquels des éléments en forme de plaque (10) sont fixés ou montés de manière rigide.

11. Élément en plaque (10) selon l'une quelconque des revendications précédentes, **caractérisé en ce qu'**une couche adhésive est prévue pour relier entre eux la plaque de base (1), la couche thermoconductrice (3) et/ou le registre (2).

12. Élément en plaque (10) selon l'une des revendications 1, 2, 4 à 11, **caractérisé en ce que** le registre (2) destiné au fluide de chauffage ou de refroidissement est disposé sur une surface plane de la plaque de base (1) opposée à sa surface irrégulière portant la couche thermoconductrice (3).

13. Élément en plaque (10) selon l'une quelconque des revendications précédentes, **caractérisé en ce que** la couche thermoconductrice (3) est préfabriquée, dans un matériau thermoconducteur solide, de manière à correspondre à la forme tridimensionnelle irrégulière de la plaque de base (1).
